# EUROPEAN PATENT APPLICATION

(11) **EP 4 506 888 A1**
(43) Date of publication of application: **12.02.2025**
(21) Application number: 24193291.2
(22) Date of filing: 07.08.2024
(51) Int. Cl.: G06T 7/00

(54) **INSPECTION APPARATUS**

(30) Priority: 08.08.2023 JP 2023129568
(71) Applicant: JUKI Corporation, Tama-shi, Tokyo 206-8551 (JP)
(72) Inventor: KOBAYASHI, Koei, Tokyo 206-8551 (JP)
(74) Representative: Hoeger, Stellrecht & Partner Patentanwälte mbB

(57) **Abstract**

The inspection apparatus includes an input unit to which a maximum allowable value of a first amount of misalignment, which indicates an amount of misalignment in a plane direction between a substrate and a component mounted on the substrate, and a maximum allowable value of a second amount of misalignment, which indicates an amount of misalignment in a rotation direction between the substrate and the component mounted on the substrate, are input, a correction unit configured, based on the maximum allowable value of one amount of misalignment of the maximum allowable value of the first amount of misalignment and the maximum allowable value of the second amount of misalignment input to the input unit, to correct the maximum allowable value of the other amount of misalignment, a teacher image creation unit configured to create a plurality of teacher images in which the first amount of misalignment and the second amount of misalignment are each different based on the maximum allowable value of the amount of misalignment corrected by the correction unit, a label assignment unit configured to assign different labels to a teacher image in which a combination of the first amount of misalignment and the second amount of misalignment satisfies a first condition and a teacher image in which the combination does not satisfy the first condition, a machine learning unit configured, based on the teacher images to which the labels are assigned, to generate a learning model in which an image of the substrate on which the component is mounted is used as an input and a good or poor mounting state of the component is used as an output, a target image obtaining unit configured to obtain a target image indicating an image of the substrate on which the component is mounted captured by a camera, a determination unit configured to input the target image into the learning model and to determine whether a mounting state of the component is good or poor, and an output unit configured to output a determination result of the determination unit.

## Description

### TECHNICAL FIELD

The technology disclosed in the present specification relates to an inspection apparatus.

### BACKGROUND ART

As disclosed in JP2021-150495A, an appearance of a substrate after a component is mounted is inspected by an appearance inspection apparatus (automated optical inspection (AOI) apparatus).

### SUMMARY OF INVENTION

When inspecting an appearance of a substrate using artificial intelligence (AI) technology, it is conceivable to create a learning model through supervised learning. In supervised learning, machine learning is performed using teacher data assigned with an OK label and teacher data assigned with an NG label. As the teacher data, it is conceivable to use image data of substrates actually produced on the production line. An OK label is assigned to image data of a normal substrate, and an NG label is assigned to image data of an abnormal substrate.

However, it is rare for abnormal substrates to be produced on the actual production line. Therefore, it is difficult to collect appropriate teacher data from actually produced substrates.

The technology disclosed in the present specification is to perform machine learning using appropriate teacher data when inspecting an appearance of a substrate using artificial intelligence technology.

The inspection apparatus disclosed in the present specification includes an input unit to which a maximum allowable value of a first amount of misalignment, which indicates an amount of misalignment in a plane direction between a substrate and a component mounted on the substrate, and a maximum allowable value of a second amount of misalignment, which indicates an amount of misalignment in a rotation direction between the substrate and the component mounted on the substrate, are input, a correction unit configured, based on the maximum allowable value of one amount of misalignment of the maximum allowable value of the first amount of misalignment and the maximum allowable value of the second amount of misalignment input to the input unit, to correct the maximum allowable value of the other amount of misalignment, a teacher image creation unit configured to create a plurality of teacher images in which the first amount of misalignment and the second amount of misalignment are each different based on the maximum allowable value of the amount of misalignment corrected by the correction unit, a label assignment unit configured to assign different labels to a teacher image in which a combination of the first amount of misalignment and the second amount of misalignment satisfies a first condition and a teacher image in which the combination does not satisfy the first condition, a machine learning unit configured, based on the teacher images to which the labels are assigned, to generate a learning model in which an image of the substrate on which the component is mounted is used as an input and a good or poor mounting state of the component is used as an output, a target image obtaining unit configured to obtain a target image indicating an image of the substrate on which the component is mounted captured by a camera, a determination unit configured to input the target image into the learning model and to determine whether a mounting state of the component is good or poor, and an output unit configured to output a determination result of the determination unit.

According to the technology disclosed in the present specification, it is possible to perform machine learning using appropriate teacher data when inspecting an appearance of a substrate using artificial intelligence technology.

### BRIEF DESCRIPTION OF DRAWINGS

FIG. 1 schematically shows a production system according to an embodiment.
FIG. 2 schematically shows a mounting apparatus according to the embodiment.
FIG. 3 is a perspective view schematically showing a part of a substrate on which a component is mounted according to the embodiment.
FIG. 4 is a plan view schematically showing the substrate on which the component is mounted according to the embodiment.
FIG. 5 schematically shows an inspection apparatus according to the embodiment.
FIG. 6 is a hardware configuration view showing a control device according to the embodiment.
FIG. 7 is a functional block diagram showing the inspection apparatus according to the embodiment.
FIG. 8 shows an input device and a display device when a teacher image is created according to the embodiment.
FIG. 9 shows the input device and the display device when a teacher image is created according to the embodiment.
FIG. 10 shows the input device and the display device when a teacher image is created according to the embodiment.
FIG. 11 shows the input device and the display device when a teacher image is created according to the embodiment.
FIG. 12 is a diagram for illustrating correlation data according to the embodiment.
FIG. 13 is a flowchart showing a method for generating a learning model according to the embodiment.
FIG. 14 is a diagram for illustrating a method for adjusting label assignment according to the embodiment.
FIG. 15 is a flowchart showing a method for determining whether a mounting state of a component is good or poor according to the embodiment.
FIG. 16 is a diagram for illustrating a method for adjusting label assignment according to an embodiment.

### DESCRIPTION OF EMBODIMENTS

### [Production System]

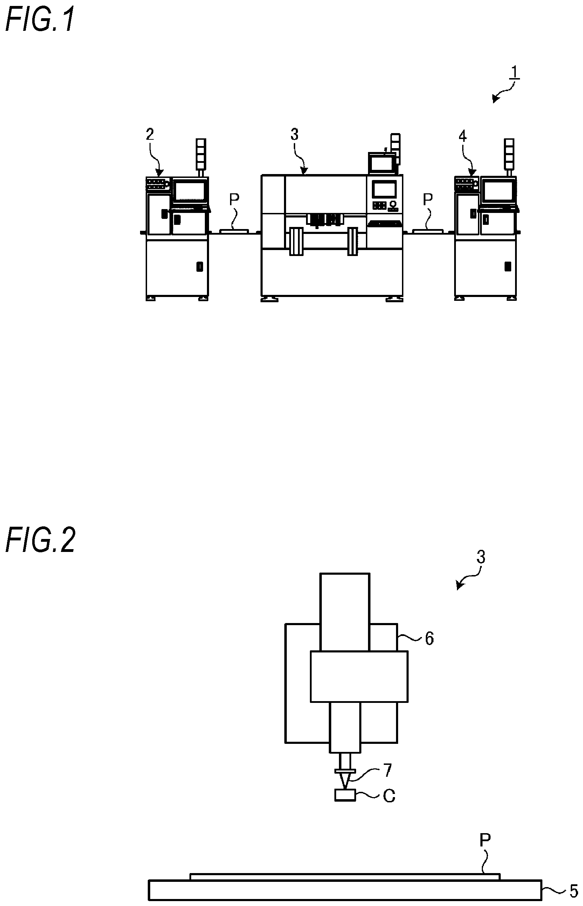

FIG. 1 schematically shows a production system 1 according to an embodiment. As shown in FIG. 1, the production system 1 includes an inspection apparatus 2, a mounting apparatus 3, and an inspection apparatus 4. A production line for electronic devices is built by the inspection apparatus 2, the mounting apparatus 3, and the inspection apparatus 4. In the embodiment, a head apparatus of the production line is the inspection apparatus 2. An end apparatus of the production line is the inspection apparatus 4.

A substrate P is conveyed on the production line. Before the substrate P is brought into the inspection apparatus 2, a cream solder is printed on the substrate P by a printing machine (not shown). The substrate P on which the cream solder has been printed is brought into the inspection apparatus 2.

After brought into the inspection apparatus 2, the substrate P is inspected by the inspection apparatus 2. The inspection apparatus 2 includes a solder printing inspection apparatus (solder paste inspection (SPI) apparatus) that inspects a printed state of the substrate P before a component C is mounted.

The substrate P inspected in the inspection apparatus 2 is brought into the mounting apparatus 3. The mounting apparatus 3 mounts a component C on the substrate P on which the cream solder has been printed. The substrate P on which the component C has been mounted is heated in a reflow furnace (not shown). As the substrate P is heated in the reflow furnace, the cream solder melts. As the molten cream solder cools, the component C is soldered to the substrate P.

The substrate P brought out from the reflow furnace is brought into the inspection apparatus 4 and then inspected in the inspection apparatus 4. The inspection apparatus 4 includes an appearance inspection apparatus (automated optical inspection (AOI) apparatus) that inspects an appearance of the substrate P after the component C is mounted. The substrate P inspected in the inspection apparatus 4 is brought out from the inspection apparatus 4.

### [Mounting Apparatus]

FIG. 2 schematically shows the mounting apparatus 3 according to the embodiment. The mounting apparatus 3 includes a substrate support member 5 supporting the substrate P, and a mounting head 6 that mounts the component C on the substrate P supported by the substrate support member 5. The mounting head 6 includes a nozzle 7 that holds the component C in a releasable manner.

### [Substrate]

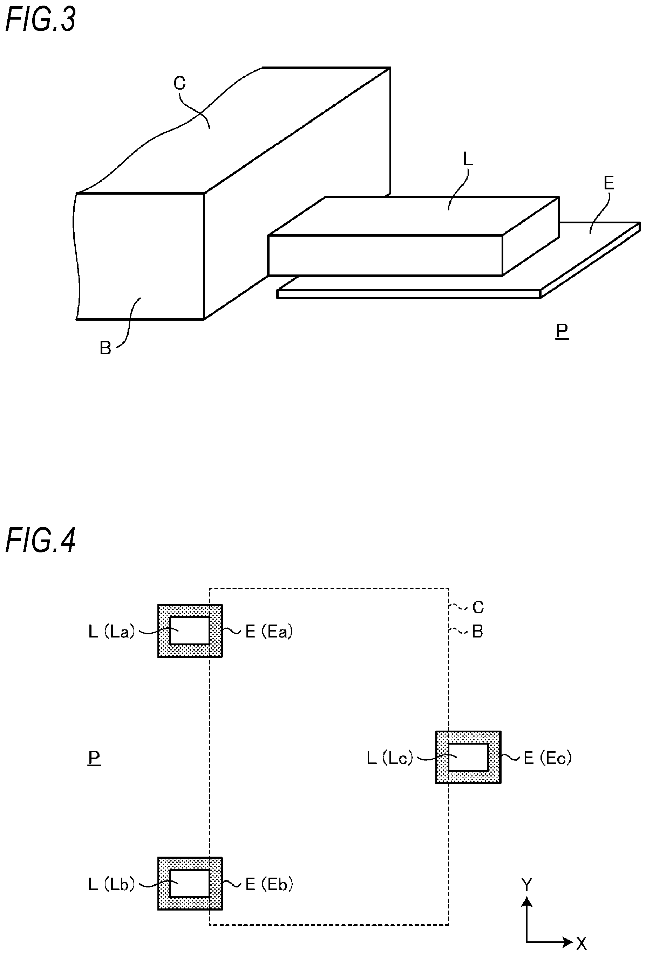

FIG. 3 is a perspective view showing a part of the substrate P on which the component C is mounted according to the embodiment. The substrate P has a land E. The component C has a body B and a lead L protruding from the body B. The body B has a housing made of synthetic resin and an element disposed inside the housing. As the element, a coil is exemplified. The lead L is a metal protrusion protruding from the body B. The lead L is connected to the element disposed inside the body B. The component C is mounted on the substrate P so that the land E and the lead L are connected via the cream solder. The component C is mounted on the substrate P so that the lead L is mounted on the land E.

FIG. 4 is a plan view schematically showing the substrate P on which the component C is mounted according to the embodiment. In the embodiment, a plurality of lands E are provided on a surface of the substrate P. In the example shown in FIG. 4, the lands E include a land Ea, a land Eb, and a land Ec. The component C has a plurality of leads L. The component C has the same number of leads L as the lands E. In the example shown in FIG. 4, the leads L include a lead La, a lead Lb, and a lead Lc. The component C is mounted on the substrate P so that the lead La is mounted on the land Ea, the lead Lb is mounted on the land Eb, and the lead Lc is mounted on the land Ec.

In the following description, a direction parallel to the surface of the substrate P is appropriately referred to as a plane direction, and a direction orthogonal to the surface of the substrate P is appropriately referred to as a vertical direction. A direction parallel to an X-axis in an XY plane parallel to the surface of the substrate P is appropriately referred to as an X-axis direction, a direction parallel to a Y-axis in the XY plane orthogonal to the X-axis is appropriately referred to as a Y-axis direction, and a rotation direction about a vertical axis orthogonal to the surface of the substrate P is appropriately referred to as a θ direction. The plane direction includes one or both of the X-axis direction and the Y-axis direction. The rotation direction is the θ direction.

The mounting apparatus 3 mounts the component C on the substrate P so that lead L is mounted on the land E at a target relative position. In the embodiment, the lead L is mounted on the land E at a target relative position, which includes that the lead L is mounted on the land E so that a center position of the land E and a center position of the lead L in the plane direction coincide with each other and a direction of the land E and a direction of the lead L in the rotation direction coincide with each other. FIG. 4 shows a state in which the lead L is mounted on the land E at a target relative position. In the embodiment, the lead L is mounted on the land E at a target relative position, which includes that the lead L is mounted on the land E so that center positions of each of the plurality of lands E (Ea, Eb, Ec) and center positions of each of the plurality of leads L (La, Lb, Lc) in the plane direction coincide with each other and directions of each of the plurality of lands E (Ea, Eb, Ec) and directions of each of the plurality of leads L (La, Lb, Lc) in the rotation direction coincide with each other. In the state in which the lead L is mounted on the land E at the target relative position, the lead L does not protrude from the land E.

### [Inspection Apparatus]

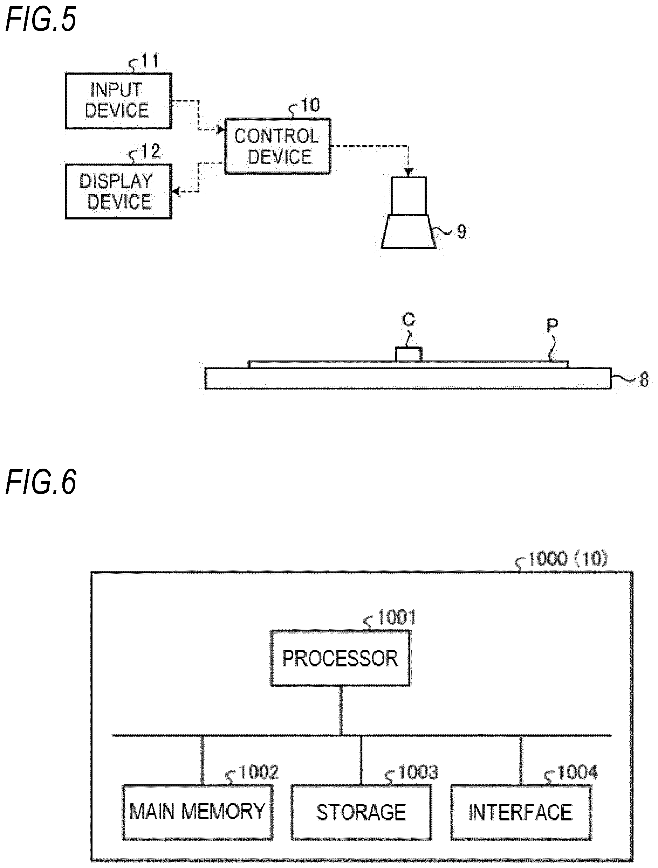

FIG. 5 is a diagram schematically showing the inspection apparatus 4 according to the embodiment. The inspection apparatus 4 is an appearance inspection apparatus that inspects an appearance of the substrate P after the component C is mounted. The inspection apparatus 4 includes a substrate support member 8 supporting the substrate P after the component C is mounted, a camera 9 that captures an image of the substrate P supported by the substrate support member 8, a control device 10, an input device 11, and a display device 12.

FIG. 6 is a hardware configuration view showing the control device 10 according to the embodiment. The control device 10 includes a computer system 1000. The control device 10 includes a processor 1001 such as a central processing unit (CPU), a main memory 1002 including a non-volatile memory such as a read only memory (ROM) and a volatile memory such as a random access memory (RAM), a storage 1003, and an interface 1004 including an input/output circuit. The functions of the control device 10 are stored as a computer program in the storage 1003. The processor 1001 reads the computer program from the storage 1003, develops the same into the main memory 1002, and executes predetermined processing in accordance with the computer program. Note that the computer program may be transmitted to the control device 10 via a network.

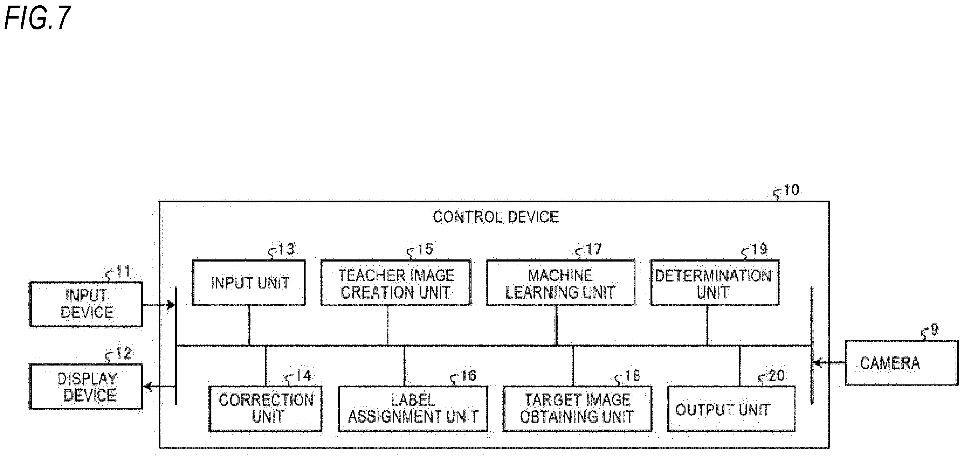

FIG. 7 is a functional block diagram showing the inspection apparatus 4 according to the embodiment. Each of the input device 11 and the display device 12 is connected to the control device 10. The input device 11 generates input data by being operated by an operator. As the input device 11, a touch sensor, a computer keyboard, or a mouse is exemplified. The display device 12 displays display data. As the display device 12, a flat-panel display such as a liquid crystal display or an organic EL display is exemplified. The display device 12 may be a touch screen including a touch sensor.

The control device 10 includes an input unit 13, a correction unit 14, a teacher image creation unit 15, a label assignment unit 16, a machine learning unit 17, a target image obtaining unit 18, a determination unit 19, and an output unit 20.

The input unit 13 obtains input data from the input device 11. The input data from the input device 11 is input to the input unit 13. In the embodiment, the operator operates the input device 11 to input a maximum allowable value of an amount of misalignment between the substrate P and the component C mounted on the substrate P into the input unit 13. The amount of misalignment between the substrate P and the component C includes an amount of misalignment in the plane direction and an amount of misalignment in the rotation direction. The amount of misalignment in the plane direction includes an amount of misalignment in the X-axis direction and an amount of misalignment in the Y-axis direction. The amount of misalignment in the rotation direction is an amount of misalignment in the θ direction. In the following description, the amount of misalignment in the X-axis direction is appropriately referred to as an amount of X misalignment, the amount of misalignment in the Y-axis direction is appropriately referred to as an amount of Y misalignment, and the amount of misalignment in the θ direction is appropriately referred to as an amount of θ misalignment.

Maximum allowable values of each of an amount of X misalignment (first amount of misalignment) and an amount of Y misalignment (first amount of misalignment), which indicate the amount of misalignment in the plane direction between the substrate P and the component C, and a maximum allowable value of an amount of θ misalignment (second amount of misalignment), which indicates the amount of misalignment in the rotation direction between the substrate P and the component C, are input to the input unit 13.

As described with reference to FIGS. 3 and 4, the land E is provided on the surface of the substrate P. The component C has the lead L. The amount of misalignment between the substrate P and the component C includes an amount of misalignment between the land E and the lead L. The amount of X misalignment between the substrate P and the component C is an amount of X misalignment between the land E and the lead L. The amount of Y misalignment between the substrate P and the component C is an amount of Y misalignment between the land E and the lead L. The amount of θ misalignment between the substrate P and the component C is an amount of θ misalignment between the land E and the lead L.

In the state in which the lead L is mounted on the land E at a target relative position, the lead L is disposed at a reference position (target position) with respect to the land E in the plane direction, and is disposed at a reference angle (target angle) with respect to the land E in the rotation direction. The amount of misalignment in the plane direction is an amount of misalignment of the lead L from the reference position in the plane direction. The amount of X misalignment is an amount of misalignment of the lead L from the reference position in the X-axis direction. The amount of Y misalignment is an amount of misalignment of the lead L from the reference position in the Y-axis direction. The amount of θ misalignment is an angle of misalignment of the lead L from the reference angle in the θ direction.

The correction unit 14 corrects, based on the maximum allowable amount of one amount of misalignment of the maximum allowable value of the amount of misalignment in the plane direction and the maximum allowable value of the amount of misalignment in the rotation direction input to the input unit 13, the maximum allowable amount of the other amount of misalignment. The correction unit 14 corrects, based on correlation data indicating a relationship between the maximum allowable value of the amount of misalignment in the plane direction and the maximum allowable value of the amount of misalignment in the rotation direction, the maximum allowable amount of the amount of misalignment input to the input unit 13. The correlation data is determined in advance and stored in the correction unit 14. Based on the correlation data, the correction unit 14 corrects the maximum allowable amount of the amount of misalignment so that the larger the maximum allowable value of the amount of misalignment in the plane direction, the smaller the maximum allowable value of the amount of misalignment in the rotation direction, and the larger the maximum allowable value of the amount of misalignment in the rotation direction, the smaller the maximum allowable value of the amount of misalignment in the plane direction.

The teacher image creation unit 15 creates a plurality of teacher images having different amounts of misalignment in the plane direction and amounts of misalignment in the rotation direction, based on the maximum allowable value of the amount of misalignment corrected by the correction unit 14. In the embodiment, the teacher image is an image created by the computer system 1000.

The label assignment unit 16 assigns different labels to a teacher image in which a combination of the amount of misalignment in the plane direction and the amount of misalignment in the rotation direction satisfies a first condition and a teacher image in which the combination does not satisfy the first condition. The label assignment unit 16 assigns an OK label (good label) to the teacher image in which the combination satisfies the first condition, and an NG label (poor label) to the teacher image in which the combination does not satisfy the first condition.

Based on the labeled teacher images, the machine learning unit 17 generates a learning model in which an image of the substrate P on which the component C is mounted is used as an input and a good or poor mounting state of the component C on the substrate P is used as an output.

The target image obtaining unit 18 obtains a target image indicating an image of the substrate P on which the component C is mounted captured by the camera 9. The component C is mounted on the surface of the substrate P. As shown in FIG. 5, in the inspection apparatus 4, the substrate P after the component C is mounted is supported by the substrate support member 8. The substrate support member 8 supports the substrate P so that the surface of the substrate P faces upward. The camera 9 is disposed above the substrate support member 8 so as to face the surface of the substrate P. The camera 9 captures an image of the substrate P after component C is mounted from above the substrate P. The camera 9 captures images of the land E and the lead L. The target image is an image captured by the camera 9. The target image obtaining unit 18 obtains a target image including the land E and the lead L.

The determination unit 19 inputs the target image obtained by the target image obtaining unit 18 into the learning model and determines whether the mounting state of the component C on the substrate P is good or poor. The good or poor mounting state of the component C includes a good or poor relative position between the land E and the lead L. The good or poor relative position between the land E and the lead L includes a good or poor relative position between the land E and the lead L in the plane direction, and a good or poor relative angle between the land E and the lead L in the rotation direction.

The output unit 20 outputs a determination result of the determination unit 19. In the embodiment, the output unit 20 outputs the determination result of the determination unit 19 to the display device 12. The display device 12 displays the determination result of the determination unit 19.

### [Creation of Teacher Image]

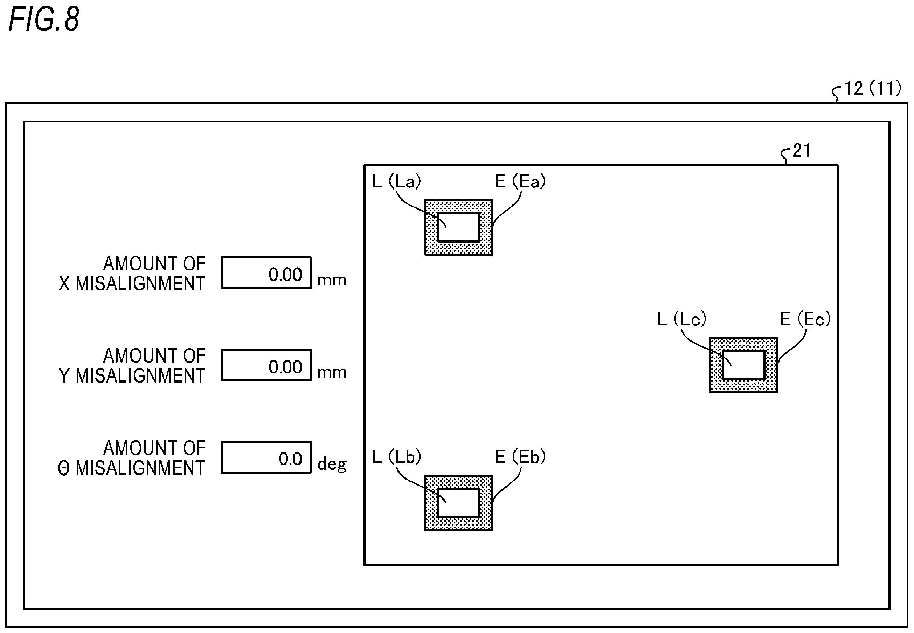

Below, a method for creating a teacher image will be described. Each of FIGS. 8, 9, 10, and 11 is a view showing the input device 11 and the display device 12 when a teacher image is created according to the embodiment.

When creating a teacher image 21, the operator operates the input device 11 to input the maximum allowable value of the amount of misalignment to the input unit 13. The maximum allowable value of the amount of misalignment may be for example, a value determined by a standard or a value independently determined by an electronic device manufacturer.

The maximum allowable value is determined for each of the amount of X misalignment, the amount of Y misalignment, and the amount of θ misalignment. The operator operates the input device 11 to input each of the maximum allowable value of the amount of X misalignment, the maximum allowable value of the amount of Y misalignment, and the maximum allowable value of the amount of θ misalignment to the input unit 13. As an example, in the embodiment, it is assumed that the maximum allowable value of the amount of X misalignment is '0.26 mm', the maximum allowable value of the amount of Y misalignment is '0.26 mm', and the maximum allowable value of the amount of θ misalignment is '6.0 degrees'.

If the amount of misalignment between the land E and the lead L is equal to or less than the maximum allowable value, the produced substrate P is determined to be normal, and the produced electronic device is determined to be a good product. If the amount of misalignment between the land E and the lead L exceeds the maximum allowable value, the produced substrate P is determined to be abnormal, and the produced electronic device is determined to be a poor product.

When the maximum allowable value of the amount of X misalignment, the maximum allowable value of the amount of Y misalignment, and the maximum allowable value of the amount of θ misalignment are input to the input unit 13, the teacher image creation unit 15 creates a plurality of teacher images 21 based on the maximum allowable value of the amount of X misalignment, the maximum allowable value of the amount of Y misalignment, and the maximum allowable value of the amount of θ misalignment input to the input unit 13. The teacher image creation unit 15 creates a plurality of teacher images to which an OK label is to be assigned and a plurality of teacher images to which an NG label is to be assigned, based on each of the maximum allowable value of the amount of X misalignment, the maximum allowable value of the amount of Y misalignment, and the maximum allowable value of the amount of θ misalignment. In the following description, a state of the normal substrate P for which an OK label is to be assigned to the teacher image 21 is appropriately referred to as an OK state (normal state), and a state of the abnormal substrate P for which an NG label is to be assigned to the teacher image 21 is appropriately referred to as an NG state (abnormal state). Additionally, the teacher image 21 to which an OK label is to be assigned is appropriately referred to as an OK image, and the teacher image 21 to which an NG label is to be assigned is appropriately referred to as an NG image.

The fact that the substrate P is in an OK state means that the relative position between the land E and the lead L is normal and the electronic device to be produced is determined to be a good product. The fact that the substrate P is in an NG state means that the relative position between the land E and the lead L is abnormal and the electronic device to be produced is determined to be a poor product.

For example, when "0.26 mm", which is the maximum allowable value of the amount of X misalignment, is input, the teacher image creation unit 15 creates a plurality of teacher images with an amount of X misalignment being "0.26 mm" or less and a plurality of teacher images with an amount of X misalignment exceeding "0.26 mm" using "0.26 mm", the maximum allowable value of the amount of X misalignment, as a boundary. When "0.26 mm", which is the maximum allowable value of the amount of Y misalignment, is input, the teacher image creation unit 15 creates a plurality of teacher images with an amount of Y misalignment being "0.26 mm" or less and a plurality of teacher images with an amount of Y misalignment exceeding "0.26 mm" using "0.26 mm", the maximum allowable value of the amount of Y misalignment, as a boundary. When "6.0 degrees", which is the maximum allowable value of the amount of θ misalignment, is input, the teacher image creation unit 15 creates a plurality of teacher images with an amount of θ misalignment being "6.0 degrees" or less and a plurality of teacher images with an amount of θ misalignment exceeding "6.0 degrees" using "6.0 degrees", the maximum allowable value of the amount of θ misalignment, as a boundary.

That is, in the embodiment, the teacher image creation unit 15 creates multiple OK images to which an OK label is to be assigned and multiple NG images to which an NG label is to be assigned based on each of the maximum allowable value of the amount of misalignment in the plane direction and the maximum allowable value of the amount of misalignment in the rotation direction input to the input unit 13. The teacher image creation unit 15 automatically creates multiple OK images and multiple NG images while slightly shifting the position of the lead L relative to the land E.

FIG. 8 shows an example in which the teacher image 21 with the amount of X misalignment being '0.00 mm', the amount of Y misalignment being '0.00 mm', and the amount of θ misalignment being '0.0 degree' is displayed on the display device 12. Since each of the amount of X misalignment, the amount of Y misalignment, and the amount of θ misalignment is zero, an OK image in which the lead L is mounted on the land E at the target relative position is created and displayed on the display device 12.

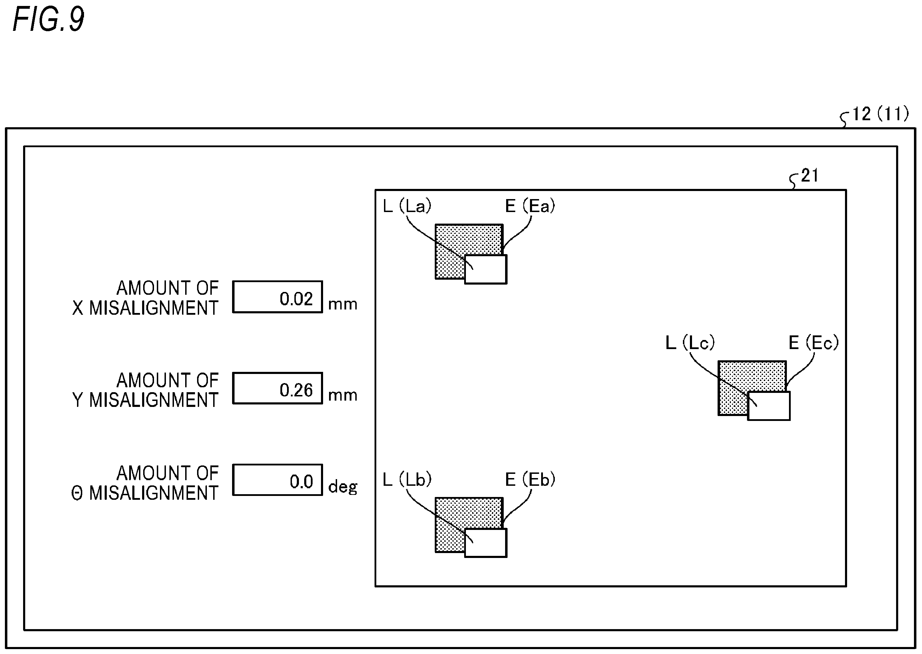

FIG. 9 shows an example in which the teacher image 21 with the amount of X misalignment being '0.02 mm', the amount of Y misalignment being '0.26 mm', and the amount of θ misalignment being '0.0 degree' is displayed on the display device 12. Since the amount of X misalignment is equal to or less than the maximum allowable value, the amount of Y misalignment is equal to or less than the maximum allowable value, and the amount of θ misalignment is equal to or less than the maximum allowable value, an OK image in which the lead L is normally mounted on the land E although the land E and the lead L are slightly misaligned is created and displayed on the display device 12.

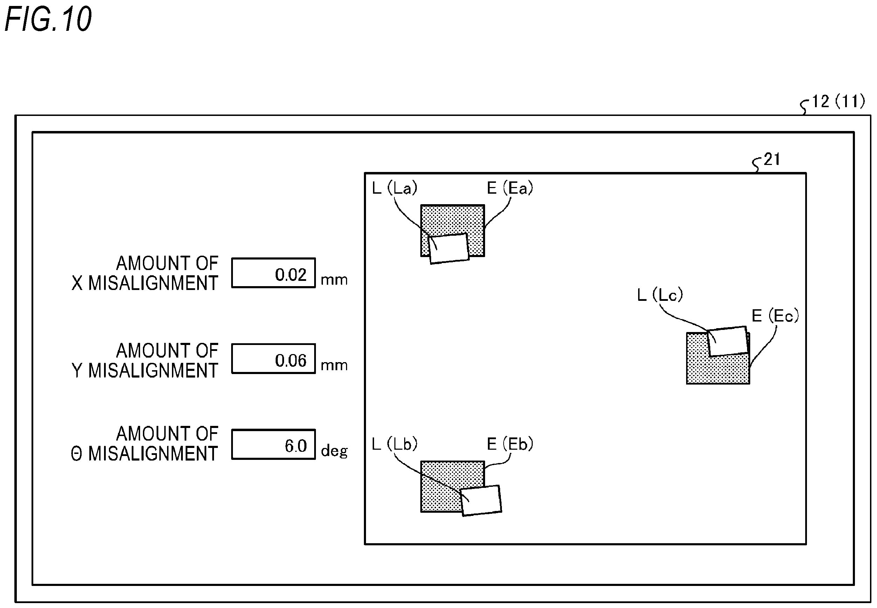

FIG. 10 shows an example in which the teacher image 21 with the amount of X misalignment being '0.02 mm', the amount of Y misalignment being '0.06 mm', and the amount of θ misalignment being '6.0 degrees' is displayed on the display device 12. Since the amount of X misalignment is equal to or less than the maximum allowable value, the amount of Y misalignment is equal to or less than the maximum allowable value, and the amount of θ misalignment is equal to or less than the maximum allowable value, an OK image in which the lead L is normally mounted on the land E although the land E and the lead L are slightly misaligned is created and displayed on the display device 12.

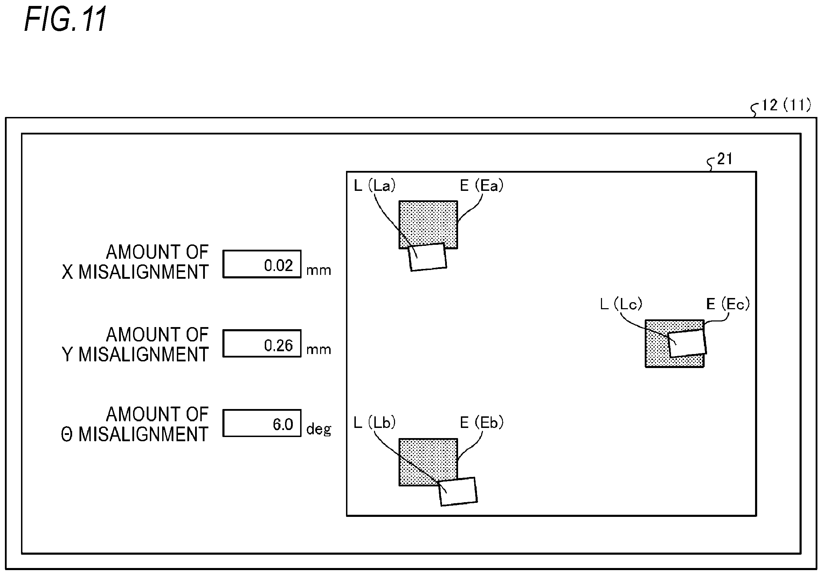

FIG. 11 shows an example in which the teacher image 21 with the amount of X misalignment being '0.02 mm', the amount of Y misalignment being '0.26 mm', and the amount of θ misalignment being '6.0 degrees' is displayed on the display device 12. Although the amount of X misalignment is equal to or less than the maximum allowable value, the amount of Y misalignment is equal to or less than the maximum allowable value, and the amount of θ misalignment is equal to or less than the maximum allowable value, the land E and the lead L are largely misaligned. It is not appropriate to use, as an OK image, the teacher image 21 in which each of the amount of X misalignment, the amount of Y misalignment, and the amount of θ misalignment is equal to or less than the maximum allowable value but the land E and the lead L are largely misaligned. Although each of the amount of X misalignment, the amount of Y misalignment, and the amount of θ misalignment is equal to or less than the maximum allowable value, it may be appropriate to use the created teacher image 21 as an NG image, depending on a combination of the amount of X misalignment, the amount of Y misalignment, and the amount of θ misalignment.

That is, in a case where the maximum allowable value of the amount of X misalignment, the maximum allowable value of the amount of Y misalignment, and the maximum allowable value of the amount of θ misalignment are determined separately and independently, although each of the amount of X misalignment, the amount of Y misalignment, and the amount of θ misalignment is equal to or less than the maximum allowable value, it may be appropriate to use the created teacher image 21 as an NG image, depending on a combination of the amount of X misalignment, the amount of Y misalignment, and the amount of θ misalignment.

Therefore, in the embodiment, when an OK image and an NG image are created based on the maximum allowable value of the amount of misalignment, the correction unit 14 corrects the maximum allowable value of the amount of misalignment input to the input unit 13 so that an OK image, which is a teacher image to which a good label is to be assigned, is created when the amount of misalignment in the plane direction is equal to or less than the maximum allowable value of the amount of misalignment in the plane direction and the amount of misalignment in the rotation direction is equal to or less than the maximum allowable value of the amount of misalignment in the rotation direction. That is, the correction unit 14 corrects, based on the maximum allowable amount of one amount of misalignment of the maximum allowable value of the amount of misalignment in the plane direction and the maximum allowable value of the amount of misalignment in the rotation direction input to the input unit 13, the maximum allowable amount of the other amount of misalignment so that when the amount of misalignment is equal to or less than the maximum allowable value, an OK image is generated regardless of combinations of the amount of X misalignment, the amount of Y misalignment, and the amount of θ misalignment.

The correction unit 14 corrects the maximum allowable amount of the amount of misalignment input to the input unit 13 so that the larger the maximum allowable value of the amount of misalignment in the plane direction, the smaller the maximum allowable value of the amount of misalignment in the rotation direction, and the larger the maximum allowable value of the amount of misalignment in the rotation direction, the smaller the maximum allowable value of the amount of misalignment in the plane direction. The correction unit 14 corrects the maximum allowable value of the amount of misalignment input to the input unit 13 based on the correlation data determined in advance.

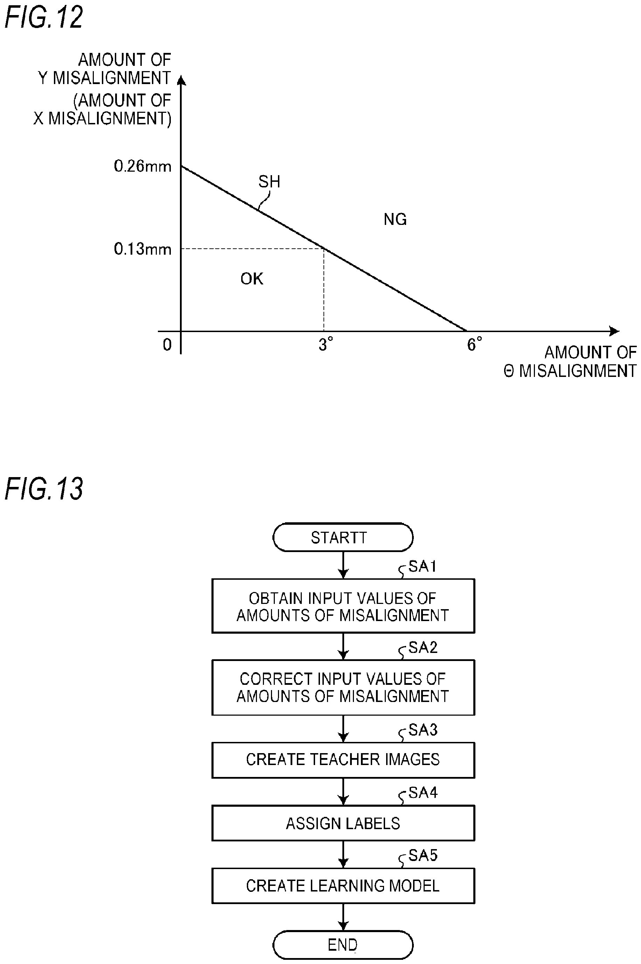

FIG. 12 is a diagram for illustrating correlation data according to the embodiment. As shown in FIG. 12, the correlation data shows the relationship between the maximum allowable value of the amount of X misalignment or amount of Y misalignment and the maximum allowable value of the amount of θ misalignment. The correlation data corrects the maximum allowable value of the amount of misalignment input to the input unit 13 so that the larger the maximum allowable value of the amount of X misalignment or amount of Y misalignment, the smaller the maximum allowable value of the amount of misalignment in the θ direction, and the larger the maximum allowable value of the amount of θ misalignment, the smaller the maximum allowable value of the amount of X misalignment or amount of Y misalignment. In the example shown in FIG. 12, the correlation data is defined so that the maximum allowable value of the amount of X misalignment or amount of Y misalignment and the maximum allowable value of the amount of θ misalignment are in a proportional relationship.

For example, when the operator inputs the amount of Y misalignment "0.26 mm", even if the amount of θ misalignment "6.0 degrees" is input, the correction unit 14 corrects the amount of θ misalignment input to the input unit 13 to "0.0 degree". When the operator inputs the amount of Y misalignment "0.13 mm", even if the amount of θ misalignment "6.0 degrees" is input, the correction unit 14 corrects the amount of θ misalignment input to the input unit 13 to "3.0 degrees". When the operator inputs the amount of Y misalignment "0.13 mm", if the amount of θ misalignment "2.0 degrees", for example, is input, the correction by the correction unit 14 is not performed, and the amount of θ misalignment "2.0 degrees" input to the input unit 13 is adopted as a basis for creating the teacher image 21. When the operator inputs the amount of Y misalignment "0.0 mm", even if the amount of θ misalignment "6.0 degrees", for example, is input, the correction by the correction unit 14 is not performed, and the amount of θ misalignment "6.0 degrees" input to the input unit 13 is adopted as a basis for creating the teacher image 21. The same applies to a case where the operator inputs the amount of X misalignment.

For example, when the operator inputs the amount of θ misalignment "6.0 degrees", even if the amount of Y misalignment "0.26 mm" is input, the correction unit 14 corrects the amount of Y misalignment input to the input unit 13 to "0.00 mm". When the operator inputs the amount of θ misalignment "3.0 degrees", even if the amount of Y misalignment "0.26 mm" is input, the correction unit 14 corrects the amount of Y misalignment input to the input unit 13 to "0.13 mm". When the operator inputs the amount of θ misalignment "3.0 degrees", if the amount of Y misalignment "0.05 mm", for example, is input, the correction by the correction unit 14 is not performed, and the amount of Y misalignment "0.05 mm" input to the input unit 13 is adopted as a basis for creating the teacher image 21. When the operator inputs the amount of θ misalignment "0.0 degrees", even if the amount of Y misalignment "0.26 mm", for example, is input, the correction by the correction unit 14 is not performed, and the amount of Y misalignment "0.26 mm" input to the input unit 13 is adopted as a basis for creating the teacher image 21.

The teacher image creation unit 15 creates a plurality of teacher images 21 to which an OK label is to be assigned and a plurality of teacher images 21 to which an NG label is to be assigned, based on each of the maximum allowable values of the amount of X misalignment, amount of Y misalignment, and amount of θ misalignment corrected by the correcting unit 14. In the example shown in FIG. 12, a straight line SH is defined which indicates the relationship between the maximum allowable value of the amount of X misalignment or amount of Y misalignment and the maximum allowable value of the amount of θ misalignment. The teacher image creation unit 15 creates a plurality of OK images that satisfy a first condition that a combination of the amount of X misalignment, the amount of Y misalignment, and the amount of θ misalignment is smaller than the straight line SH. The teacher image creation unit 15 creates a plurality of OK images in which the amount of X misalignment, the amount of Y misalignment, and the amount of θ misalignment are each different from each other. Additionally, the teacher image creation unit 15 creates a plurality of NG images that satisfy a second condition that a combination of the amount of X misalignment, the amount of Y misalignment, and the amount of θ misalignment is larger than the straight line SH. The teacher image creation unit 15 creates a plurality of NG images in which the amount of X misalignment, the amount of Y misalignment, and the amount of θ misalignment are each different from each other.

### [Creation of Learning Model]

FIG. 13 is a flowchart showing a method for generating a learning model according to the embodiment. The operator operates the input device 11 to input the maximum allowable values of each of the amount of X misalignment, the amount of Y misalignment, and the amount of θ misalignment into the input unit 13. The input unit 13 obtains the input values of the maximum allowable values of each of the amount of X misalignment, the amount of Y misalignment, and the amount of θ misalignment from the input device 11 (step SA1).

Based on the correlation data, the correction unit 14 corrects the input values of the maximum allowable values of each of the amount of X misalignment, the amount of Y misalignment, and the amount of θ misalignment input to the input device 11 (step SA2).

The teacher image creation unit 15 creates a plurality of teacher images in which the amount of X misalignment, the amount of Y misalignment, and the amount of θ misalignment are each different from each other, based on the maximum allowable values of each of the amount of X misalignment, the amount of Y misalignment, and the amount of θ misalignment corrected by the correction unit 14 (step SA3).

The label assignment unit 16 assigns an OK label to the teacher image 21 in which a combination of the amount of X misalignment, the amount of Y misalignment, and the amount of θ misalignment satisfies the first condition, and assigns an NG label to the teacher image 21 in which a combination of the amount of X misalignment, the amount of Y misalignment, and the amount of θ misalignment does not satisfy the first condition and satisfies the second condition (step SA4).

The machine learning unit 17 generates a learning model in which an image of the substrate P on which the component C is mounted is used as an input and a good or poor mounting state of the component C is used as an output, based on the teacher images to which the OK label or the NG label is assigned (step SA5).

### [Adjustment of Label Assignment]

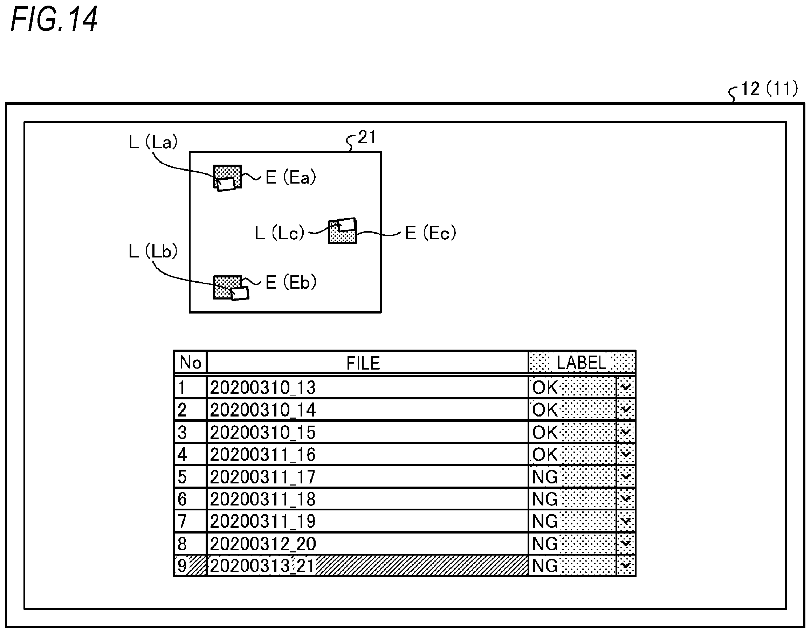

FIG. 14 is a diagram for illustrating a method for adjusting label assignment according to the embodiment. In the embodiment, when there is a teacher image 21 in which the combination of the amount of X misalignment or amount of Y misalignment and the amount of θ misalignment corrected by the correction unit 14 coincides with the straight line SH, the output unit 20 causes the display device 12 to display a list of the teacher images 21 in which the combination of the amount of X misalignment or amount of Y misalignment and the amount of θ misalignment coincides with the straight line SH, and the labels attached to the teacher images 21. Additionally, the output unit 20 causes the display device 12 to display the teacher image 21 selected by the operator from the list of the teacher images 21. The operator can select a teacher image 21 by operating the input unit 11.

The teacher image 21 in which the combination of the amount of X misalignment or amount of Y misalignment and the amount of θ misalignment coincides with the straight line SH can be regarded as a teacher image 21 present at a boundary between the OK image and the NG image. Therefore, for the teacher image 21 in which the combination of the amount of X misalignment or amount of Y misalignment and the amount of θ misalignment coincides with the straight line SH, it may be appropriate to consider it as an NG image, even though the OK label has been assigned by the label assignment unit 16. In addition, for the teacher image 21 in which the combination of the amount of X misalignment or amount of Y misalignment and the amount of θ misalignment coincides with the straight line SH, it may be appropriate to consider it as an OK image, even though the NG label has been assigned by the label assignment unit 16. For the teacher image 21 present at the boundary between the OK image and the NG image, the operator may determine whether the teacher image is an OK image or an NG image. The teacher image 21 present at the boundary between the OK image and the NG image is displayed on the display device 12, so that the operator can check the teacher image 21 displayed on the display device 12 and determine whether it is an OK image or an NG image. The operator can change the label assigned by the label assignment unit 16 by operating the input device 11 based on the operator's determination result. The operator can change an OK label assigned by the label assignment unit 16 to an NG label or an NG label assigned by the label assignment unit 16 to an OK label by operating the input device 11 based on the operator's determination result.

### Determination As To Whether Mounting State of Component Is Good or Poor]

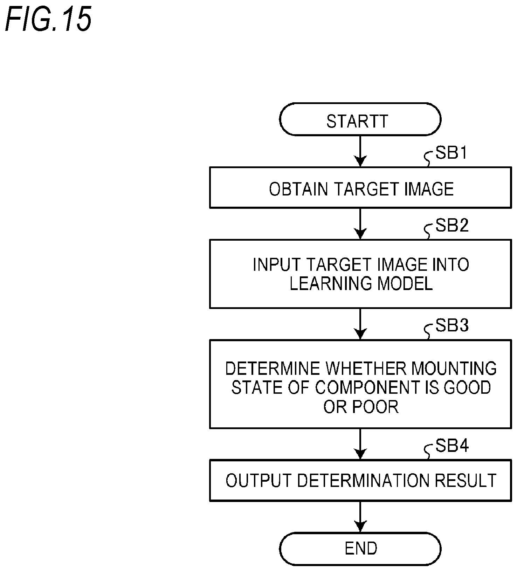

FIG. 15 is a flowchart showing a method for determining whether a mounting state of the component C is good or poor according to the embodiment. The substrate P on which the component C is mounted in the mounting apparatus 3 is conveyed from the mounting apparatus 3 to the inspection apparatus 4. The substrate P on which the component C is mounted is supported by the substrate support member 8. With the substrate P supported by the substrate support member 8, the substrate P is captured by the camera 9.

The target image obtaining unit 18 obtains a target image indicating an image of the substrate P captured by the camera 9 (Step SB1).

The determination unit 19 inputs the target image obtained by the target image obtaining unit 18 into the learning model (step SB2).

The determination unit 19 determines whether the mounting state of the component C is good or bad based on an output from the learning model (step SB3).

The output unit 20 outputs a determination result of the determination unit 19. The determination result of the determination unit 19 includes a determination result as to whether the produced substrate P is normal or not. In the embodiment, the output unit 20 causes the display device 12 to display the determination result of the determination unit 19 (step SB4).

### [Effects]

As described above, according to the embodiment, when inspecting the appearance of the substrate P after component C is mounted using artificial intelligence technology, an appropriate teacher image 21 is generated. Depending on the combination of the maximum allowable value of the amount of X misalignment, the maximum allowable value of the amount of Y misalignment, and the maximum allowable value of the amount of θ misalignment input to the input unit 13, a teacher image 21 that should be an OK image may be an NG image or a teacher image 21 that should be an NG image may be an OK image. In the embodiment, an appropriate teacher image 21 is generated by correcting at least one of the maximum allowable value of the amount of X misalignment, the maximum allowable value of the amount of Y misalignment, and the maximum allowable value of the amount of θ misalignment input to the input unit 13. Accordingly, determination as to whether the produced substrate P is good or poor is appropriately performed.

### [Other Embodiments]

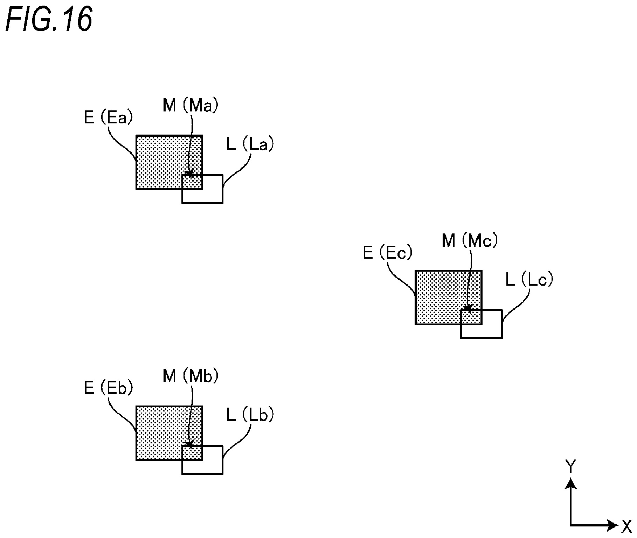

FIG. 16 is a diagram for illustrating a method for adjusting label assignment according to an embodiment. In the example described with reference to FIG. 14, the teacher image 21 present at the boundary between the OK image and the NG image is displayed on the display device 12, and the label assigned by the label assignment unit 16 is changed based on the input data from the input device 11. As shown in FIG. 16, for example, the determination unit 19 may change the label assigned by the label assignment unit 16 by image processing the teacher image 21 present at the boundary between the OK image and the NG image. The determination unit 19 calculates an area of an overlapping region M of the land E and the lead L. The determination unit 19 calculates a ratio of the area of the overlapping region M to an area of the lead L. When the ratio of the area of the overlapping region M to the area of the lead L is equal to or greater than a threshold value determined in advance, the determination unit 19 determines that the relative position between the land E and the lead L is in a normal state. The overlapping region M includes an overlapping region Ma of the land Ea and the lead La, an overlapping region Mb of the land Eb and the lead Lb, and an overlapping region Mc of the land Ec and the lead Lc. When the ratios for all of the overlapping region Ma, the overlapping region Mb, and the overlapping region Mc are equal to or greater than the threshold value, the determination unit 19 determines that the relative position between the land E and the lead L is in a normal state, and assigns an OK label to the teacher image 21. When the ratio of at least one of the overlapping region Ma, the overlapping region Mb, and the overlapping region Mc is smaller than the threshold value, the determination unit 19 determines that the relative position between the land E and the lead L is not in a normal state, and assigns an NG label to the teacher image 21.

## Claims

1. An inspection apparatus comprising:
an input unit to which a maximum allowable value of a first amount of misalignment, which indicates an amount of misalignment in a plane direction between a substrate and a component mounted on the substrate, and a maximum allowable value of a second amount of misalignment, which indicates an amount of misalignment in a rotation direction between the substrate and the component mounted on the substrate, are input;
a correction unit configured, based on the maximum allowable value of one amount of misalignment of the maximum allowable value of the first amount of misalignment and the maximum allowable value of the second amount of misalignment input to the input unit, to correct the maximum allowable value of the other amount of misalignment;
a teacher image creation unit configured to create a plurality of teacher images in which the first amount of misalignment and the second amount of misalignment are each different based on the maximum allowable value of the amount of misalignment corrected by the correction unit;
a label assignment unit configured to assign different labels to a teacher image in which a combination of the first amount of misalignment and the second amount of misalignment satisfies a first condition and a teacher image in which the combination does not satisfy the first condition;
a machine learning unit configured, based on the teacher images to which the labels are assigned, to generate a learning model in which an image of the substrate on which the component is mounted is used as an input and a good or poor mounting state of the component is used as an output;
a target image obtaining unit configured to obtain a target image indicating an image of the substrate on which the component is mounted captured by a camera;
a determination unit configured to input the target image into the learning model and to determine whether a mounting state of the component is good or poor; and
an output unit configured to output a determination result of the determination unit.

2. The inspection apparatus according to claim 1, wherein a land is provided on a surface of the substrate,
wherein the component has a lead placed on the land, and
wherein the amount of misalignment comprises an amount of misalignment between the land and the lead.

3. The inspection apparatus according to claim 1, wherein the correction unit is configured to correct the maximum allowable value of the amount of misalignment based on correlation data indicating a relationship between the maximum allowable value of the first amount of misalignment and the maximum allowable value of the second amount of misalignment determined in advance.

4. The inspection apparatus according to claim 1, wherein the correction unit is configured to correct the maximum allowable value of the amount of misalignment so that the larger the maximum allowable value of the first amount of misalignment, the smaller the maximum allowable value of the second amount of misalignment, and the larger the maximum allowable value of the second amount of misalignment, the smaller the maximum allowable value of the first amount of misalignment.

5. The inspection apparatus according to claim 1, wherein the teacher image creation unit is configured to create a plurality of teacher images to which a good label is to be assigned and a plurality of teacher images to which a poor label is to be assigned, based on each of the maximum allowable value of the first amount of misalignment and the maximum allowable value of the second amount of misalignment corrected by the correction unit.

6. The inspection apparatus according to claim 5, wherein the correction unit is configured to correct the maximum allowable value of the amount of misalignment so that a teacher image to which the good label is to be assigned is created when the first amount of misalignment is equal to or less than the maximum allowable value of the first amount of misalignment and the second amount of misalignment is equal to or less than the maximum allowable value of the second amount of misalignment.
